# EUROPÄISCHE PATENTSCHRIFT

(11) **EP 0 742 700 B1**
(45) Veröffentlichungstag und Bekanntmachung des Hinweises auf die Patenterteilung: **08.04.1998**
(21) Anmeldenummer: 95906264.7
(22) Anmeldetag: 21.01.1995
(51) Int. Cl.: A61C 17/08, B65H 27/00

(54) **DENTALFLÜSSIGKEITSABSAUGER AUS GEWICKELTEN, BIOLOGISCH ABBAUBAREN MATERIALSCHICHTEN SOWIE VERFAHREN ZUR HERSTELLUNG**
DENTAL FLUID SUCTION UNIT MADE FROM ROLLED LAYERS OF BIO-DEGRADABLE MATERIAL AND A PROCESS FOR THE PRODUCTION OF THE SAID UNIT
DISPOSITIF D'ASPIRATION DE SALIVE COMPOSE DE COUCHES ENROULEES D'UN MATERIAU BIODEGRADABLE ET SON PROCEDE DE FABRICATION

(30) Priorität: 26.01.1994 DE 4402142
(43) Veröffentlichungstag der Anmeldung: 20.11.1996
(73) Patentinhaber: ALBERT EGER GmbH & Co., D-71364 Winnenden (DE)
(72) Erfinder: LANGE-MICKEL, Gertrud, D-71364 Winnenden (DE); MÖRSCH, Paul, D-74554 Michelbach/Bilz (DE); WAHL, Gebhard, D-71364 Winnenden (DE)
(74) Vertreter: KOHLER SCHMID + PARTNER
(86) Internationale Anmeldenummer: DE9500087
(87) Internationale Veröffentlichungsnummer: WO9520364

(56) Entgegenhaltungen:
- DE-U- 9 216 033

## Beschreibung

Die Erfindung betrifft eine biegsame Papierhülse, insbesondere einen Einweg-Speichelzieher für den zahnärztlichen Gebrauch, bestehend aus zwei durch einen Faltenbalg einstückig miteinander verbundenen Rohrabschnitten.

Eine solche Papierhülse ist aus dem deutschen Gebrauchsmuster G 92 16 033.6 bekannt.

Hülsen mit zwei durch einen Faltenbalg einstückig miteinander verbundenen Rohrabschnitten werden seit längerer Zeit von Zahnärzten während einer Zahnbehandlung benutzt, um mit Hilfe einer Unterdruckvorrichtung, welche an den einen der beiden Rohrabschnitte angeschlossen ist, durch den anderen Rohrabschnitt Speichel während einer Zahnbehandlung aus der Mundhöhle des Patienten zu ziehen, um eine Überflutung der Mundhöhle mit Speichel zu vermeiden und ein übersichtliches Arbeitsfeld für den Zahnarzt zu gewährleisten. Derartige Speichelzieher oder Speichelsauger müssen einerseits zumindest eine Zeitlang resistent gegen Wasser sein, um während der Behandlungsdauer des Patienten nicht durchzuweichen. Andererseits muß durch den im mittleren Teil des Speichelziehers angeordneten Balg eine Biegsamkeit der Vorrichtung ermöglicht werden, um das absaugende Rohrende von oben in den Bereich des Mundbodens des Patienten bringen zu können, wobei die Unterdruckvorrichtung seitlich und meistens unterhalb des Patienten angeordnet ist. Dies kann nur durch eine Biegung des Balges um einen relativ großen Biegewinkel realisiert werden.

Bei bisher bekannten Speichelsaugern wurde aus Gründen der Festigkeit bislang entweder ein Metallrohr oder ein Kunststoffrohr mit einem entsprechenden Balg eingesetzt. Dies war im Falle metallener Speichelzieher aufgrund der hohen Anschaffungskosten, der dennoch begrenzten Lebensdauer und des durch das Reinigen, Desinfizieren und Sterilisieren erforderlichen Aufwandes nachteilig. Kunststoff-Speichelzieher, die aus hygienischen Gründen als Einwegartikel eingesetzt werden konnten, waren demgegenüber zwar billiger, bereiteten jedoch Probleme bei der Entsorgung.

Schon vor über 50 Jahren, als Kunststoffe noch nicht in der heutigen Qualität und zu den heute üblichen niedrigen Preisen zur Verfügung standen, wurden bereits Einweg-Speichelzieher aus Hartpappe eingesetzt, die jedoch in ihren Wandungen Drahteinlagen besaßen, damit beim Umbiegen der Hülse das Öffnungslumen über die gesamte Länge des Speichelziehers im wesentlichen beibehalten werden konnte. Durch die Drahteinlage wurden derartige Speichelzieher aus Hartpappe oder Fasermaterialien in der Herstellung wieder relativ teuer und bereiteten nicht wesentlich geringere Entsorgungsprobleme als entsprechende Einweg-Speichelzieher aus Kunststoff heutzutage.

Der in dem eingangs genannten Gebrauchsmuster G 92 16 033.6 beschriebene Speichelzieher aus Papiermaché, Steinpappe, Hartpappe, Pappe oder Papierstoffen soll durch Formen und/oder Pressen im Pappguß und anschließende Formung zu einem Rohr hergestellt werden. Dabei ist bereits vorgesehen, daß ein Teilabschnitt des Rohres als Faltenbalg ausgebildet wird, wodurch dem Rohr eine gewisse Flexibilität verliehen werden soll, so daß es im Bereich des Faltenbalges umbieg- oder abwinkelbar ist, ohne daß sich der Durchlaßquerschnitt des Rohres verringert.

Dies ist jedoch bei dem in der Druckschrift beschriebenen Gerät nur dann möglich, wenn wiederum eine Versteifung der Rohrwandungen mittels einer Drahteinlage vorgesehen wird, da andernfalls das einschichtig aufgebaute Rohr auch im Bereich des Faltenbalges knickt bzw. ein solcher Faltenbalg mit einem einschichtigen Rohr aus Papiermaché, Steinpappe, Hartpappe, Pappe oder Papierstoffen gar nicht herstellbar ist.

Aufgabe der vorliegenden Erfindung ist es daher, eine biegsame Papierhülse der eingangs beschriebenen Art vorzustellen, bei der sichergestellt ist, daß das Öffnungslumen auch ohne Drahteinlage bei Biegung der Hülse durch Abwinkeln des Faltenbalges in voller Größen bestehenbleibt.

Erfindungsgemäß wird diese Aufgabe dadurch gelöst, daß die Papierhülse aus mehrlagigem, insbesondere 3- bis 15-lagigem, vorzugsweise 4- bis 10-lagigem Papier der Dicke 0,07 mm bis 0,35 mm, insbesondere 0,1 bis 0,2 mm aufgebaut ist und eine Wandstärke zwischen 0,2 bis 2,5 mm, vorzugsweise 0,5 bis 1 mm aufweist.

Überraschenderweise wird durch die erfindungsgemäße mehrlagige Anordnung der Papierschichten, die eigentlich zu einer Versteifung führt und daher der geforderten Biegsamkeit der Papierhülse entgegenwirkt, die Flexibilität der Papierhülse ohne Drahteinlage erst ermöglicht, da durch die erfindungsgemäße Maßnahme nicht nur die Rohrabschnitte, sondern auch der Faltenbalg selbst eine Versteifung erfährt, die beim Abbiegen des Faltenbalgs ein Abknicken und damit eine drastische Verringerung des Öffnungslumens der Hülse verhindert. Die angegebenen Werte für die Papierdicke der einzelnen Lagen, die Anzahl der Lagen sowie die Wandstärke der Papierhülse haben sich als besonders günstig für die an sich entgegengerichteten Forderungen nach einer hohen Steifigkeit und gleichzeitig einer großen Biegsamkeit der Hülse erwiesen.

Besonders bevorzugt ist eine Ausführungsform der erfindungsgemäßen Papierhülse, bei der die Papierlagen Langfaserzellstoff mit hohem Mahlgrad und Fasern enthalten, deren Länge großteils bei 5 mm und darüber liegt. Durch die relativ langen Fasern und den hohen Mahlgrad wird ein hoher Vernetzungsgrad der Fasern erreicht, so daß eine große Elastizität bei gleichzeitiger hoher Festigkeit des Materials erhalten wird. Papiermaché- oder Pappmaterial ist im Gegensatz dazu kurzfaserig und bricht entsprechend leicht, so daß weder die erforderliche Festigkeit, noch die geforderte Biegsamkeit der Hülse erreicht werden kann.

Bei einer weiteren Ausführungsform der erfindungsgemäßen Papierhülse sind die Papierlagen insbesondere aus einem endlichen Zuschnitt parallelgewickelt. Dies hat den Vorteil, daß damit - die Stabilität der Hülse besonders hoch wird. Als Nachteil muß allerdings eine gewiße Unrundheit der Hülse in Kauf genommen werden, da der Parallelgewickelte Zuschnitt einen Anfang und ein Ende aufweist, was zu einer radialen Assymmetrie der gewickelten Hülse führt.

Bei einer anderen Ausführungsform sind die Papierlagen aus Endlosmaterial in Spiralwickeltechnik gewickelt. Dadurch kann die Papierhülse nahezu ideal rund hergestellt werden, wobei jedoch eine geringere Stabilität in Kauf genommen werden muß.

Besonders bevorzugt für den angegebenen Zweck zahnärztlichen Gebrauchs ist eine Ausführungsform der erfindungsgemäßen Papierhülse, bei der die Innen- und Außenflächen mit wasserresistentem oder wasserabweisendem Material beschichtet sind. Die Papierhülse kannn alternativ auch von vornherein aus wasserresistenten Papierlagen aufgebaut sein. Damit kann auf jeden Fall sichergestellt werden, daß eine derartige Einweg-Speichelzieherhülse während einer Behandlungssitzung nicht durchweicht.

Bei Ausführungsformen kann eine auf einem der Rohrabschnitte aufschiebbare, mit Durchbrechungen versehene Kappe vorgesehen sein, die insbesondere bei der Verwendung als Einweg-Speichelzieher ein Absaugen des im Mund des Patienten befindlichen Rohrabschnittes und damit eine Unterbrechung der Speichelabsaugung verhindert.

Besonders billig in der Herstellung ist eine derartige Kappe, wenn sie aus dem gleichen Material besteht, wie die erfindungsgemäße biegsame Papierhülse. Insbesondere kann durch die mehrschichtige Anordnung der Papierlagen eine hohe Festigkeit der Kappe erreicht werden.

Bei Ausführungsformen der Erfindung weist die Papierhülse ein Verhältnis von Länge zu lichtem Innendurchmesser zwischen 5 und 25, vorzugsweise zwischen 10 und 20, insbesondere etwa 15, auf. Die Anordnung des Faltenbalges zwischen den beiden Rohrabschnitten kann symmetrisch oder asymmetrisch gewählt werden.

Besonders bevorzugt ist eine Ausführungsform der erfindungsgemäßen Papierhülse, bei der der Faltenbalg so lang ist, daß die beiden durch den Faltenbalg miteinander verbundenen Rohrabschnitte durch Biegen des Faltenbalgs um etwa 180° in eine Position parallel zueinander gebracht werden können. Dadurch kann insbesondere bei der Verwendung als Einweg-Speichelzieher jede beliebige Anordnung der Unterdruckvorrichtung relativ zum Patienten gewählt werden.

In den Rahmen der Erfindung fällt auch ein Verfahren zur Herstellung einer biegbaren Papierhülse der eingangs genannten Art, das dadurch gekennzeichnet ist,
daß bei einem ersten Herstellungsschritt auf einer Wickeleinrichtung eine rohrförmige Papierhülse aus dünnem Papier mehrlagig gewickelt und jede Lage mit ihren benachbarten Lagen verklebt wird,
daß in einem zweiten Herstellungsschritt die mehrlagige Papierhülse auf einem Rilldorn einer Rillvorrichtung, der auf seiner axialen Länge einen glatten, einen gerillten und daran anschließend einen weiteren glatten Bereich aufweist, mit Hilfe zweier an den Enden der Papierhülse angeordneter Zentrierbüchsen axial lagerichtig und radial zentrisch positioniert, gemeinsam mit dem Rilldorn in Rotation um ihre Längsachse versetzt, durch eine radiale Hubbewegung mindestens einer axial parallel zum Rilldorn angeordneten Rillrolle gegen den gerillten Bereich des Rilldorns gedrückt und nach Abheben der Rillrolle vom Rilldorn abgestreift wird, und
daß in einem dritten Herstellungsschritt die gerillte mehrlagige Papierhülse auf einen Faltdorn gesteckt, mittels beidseits des gerillten Bereichs der Papierhülse angeordneter Klemmringe auf zwei von den Enden der Papierhülse in axialer Richtung jeweils bis zu den Klemmringen sich erstreckende weitere Zentrierbüchsen gespannt und durch axiales Zusammenschieben der beiden weiteren Zentrierbüchsen im Bereich der Rillung aufgefaltet und schließlich nach Entfernen der Klemmringe von den weiteren Zentrierbüchsen abgestreift wird.

Bei einer besonders bevorzugten Variante des erfindungsgemäßen Verfahrens wird zumindest der zweite, vorzugsweise aber auch der dritte Herstellungsschritt bereits vor dem Aushärten der Verklebung benachbarter Papierlagen aus dem ersten Herstellungsschritt durchgeführt.

Besonders bevorzugt beträgt die Restfeuchte der Papierhülse im zweiten, vorzugsweise auch im dritten Herstellungsschritt mehr als 20 %, besser noch 30 % bis 40 %. Dadurch wird eine Herstellung der Rillung sowie des Faltenbalges an der Papierhülse ermöglicht, ohne daß das Material wegen zu hoher Sprödigkeit bricht.

Bei einer weiteren Verfahrensvariante wird das Abstreifen der Papierhülse im zweiten und dritten Herstellungsschritt durch ein Abziehen der Papierhülse vom Rilldorn bzw. vom Faltdorn bewirkt. Um ein vorzeitiges Falten oder Beschädigen der Papierhülse am Ende des zweiten Herstellungsschrittes zu vermeiden, darf die Hülse nämlich nicht vom Rilldorn geschoben werden. Am Ende des dritten Herstellungsschrittes sollte die nunmehr bereits gefaltete Papierhülse beim Abstreifen vom Faltdorn ebenfalls nicht geschoben, sondern wiederum abgezogen werden, um ein Verklemmen der gefalteten Papierhülse zu vermeiden.

Um die Radialkräfte bei der Radialbewegung der Rillrollen auf die Hülse so klein wie möglich zu halten, werden im zweiten Herstellungsschritt bevorzugt mehrere, insbesondere drei oder vier symmetrisch um den Umfang des Rilldornes angeordnete Rillrollen eingesetzt. Bei Verwendung von lediglich zwei Rillrollen in Gegenüberstellung muß mit einem Ausweichen des Rilldornes mit der Papierhülse in einer Richtung senkrecht zur Verbindungsebene der Rillrollen gerechnet werden. Dies wird durch die Verwendung von drei oder mehreren Rillrollen vermieden.

Vorzugsweise sind verschiedene, austauschbare Sätze von Rilldornen und zugehörigen Rillrollen mit unterschiedlicher Anzahl und/oder Anordnung und/oder Beabstandung und/oder Tiefe der Rillen zum Einsatz im zweiten Herstellungsschritt vorgesehen, so daß damit Rillungen und entsprechende Faltenbälge unterschiedlicher Geometrie hergestellt werden können.

Bei einer bevorzugten Verfahrensvariante wird der Innendurchmesser der Papierhülse im Verhältnis zum Außendurchmesser des Rilldornes so gewählt, daß eine Rückverformung der im zweiten Herstellungsschritt erzeugten Rillen auf der Papierhülse beim Abstreifen derselben vom Rilldorn vermieden wird.

Bei einer besonders einfachen Verfahrensvariante können die Rillrollen freilaufend gestaltet sein und beim radialen Anpressen gegen die Papierhülse eine entsprechende Umfangsgeschwindigkeit annehmen.

Die Rillrollen können aber gemäß einer anderen Verfahrensvariante auch mit Hilfe eines Motors angetrieben werden.

Bevorzugt ist eine Verfahrensvariante, bei der im zweiten Herstellungsschritt die Umfangsgeschwindigkeit des Außendurchmessers der Papierhülse durch entsprechende Einstellung der Rotationsgeschwindigkeit des Rilldornes gleich der Umfangsgeschwindigkeit der Rillrollen gewählt wird, so daß keine gegenseitige Kraftübertragung auf die Antriebslager der Rotationsmotoren erfolgt.

Bevorzugt ist auch eine Verfahrensvariante, bei der der Innendurchmesser der Papierhülse, die Anzahl, die Anordnung und Tiefe der im zweiten Herstellungsschritt erzeugten Rillen sowie der Außendurchmesser des Faltdornes so gewählt werden, daß der im dritten Herstellungsschritt gefaltete Balgbereich der Papierhülse den Faltdorn am ganzen Umfang berührt. Dadurch kann ein seitliches Ausweichen der Papierhülse verhindert werden, so daß eine gleichmäßige Faltung im dritten Herstellungsschritt erzielt wird.

Einer weiteren vorteilhaften Verfahrensvariante schließlich wird im zweiten Herstellungsschritt das Verhältnis von Rilltiefe und Rillenabstand im Bereich 1:2 bis 1:5 gewählt.

Weitere Merkmale und Vorteile der Erfindung ergeben sich aus der nachfolgenden Beschreibung eines Ausführungsbeispieles der Erfindung anhand der Zeichnung, die erfindungswesentliche Einzelheiten zeigt, und aus den Ansprüchen.

Es zeigen:
- Fig. 1: eine schematische Schnittdarstellung der Rillvorrichtung mit aufgezogener Papierhülse für den zweiten Herstellungsschritt; und
- Fig. 2: eine schematische Schnittdarstellung einer Faltvorrichtung für den dritten Herstellungsschritt mit aufgezogener und bereits im Bereich der Rillung aufgefalteter Papierhülse.

Die erfindungsgemäße biegsame Papierhülse, die sich insbesondere als Einweg-Speichelzieher für den zahnärztlichen Gebrauch eignet und im Endzustand aus zwei durch einen Faltenbalg einstückig miteinander verbundenen Rohrabschnitten besteht, wird im wesentlichen in drei Schritten hergestellt:

In einem ersten Herstellungsschritt wird auf einer in der Zeichnung nicht dargestellten Wickeleinrichtung eine rohrförmige Papierhülse aus dünnem Papier mehrlagig gewickelt und jede Lage mit ihren benachbarten Lagen verklebt. Dabei sollten mindestens drei Lagen, vorzugsweise fünf bis zehn Lagen gewickelt werden, damit die Hülse eine entsprechende Festigkeit bei gleichzeitiger Biegsamkeit durch den in den nächsten Herstellungsschritten erzeugten Faltenbalg erhält. Dabei wird Papier der Dicke 0,07 bis 0,3 mm, vorzugsweise 0,1 bis 0,2 mm verwendet, daß eine Grammatur zwischen 60 und 240 g/m² aufweisen kann. Die Wandstärke der Papierhülse liegt zwischen 0,2 und 2,5 mm, vorzugsweise zwischen 0,5 und 1 mm.

Die Papierlagen können entweder aus einem Zuschnitt parallelgewickelt werden, was zu einer besonders hohen Stabilität der Papierhülse führt. Ein Nachteil der Parallelwicklung besteht jedoch darin, daß der für die Hülse verwendete endliche Zuschnitt einen Anfang und ein Ende aufweist, was im Effekt zu einer gewissen Unrundheit der erzeugten Papierhülse führt.

Alternativ können die Papierlagen auch in einer Spiralwickeltechnik mit Endlos-Papiermaterial erzeugt werden, wodurch die Papierhülse ideal rund hergestellt werden kann. Nachteilig bei der Spiralwickeltechnik ist die gegenüber parallelgewickelten Hülsen etwas verminderte Festigkeit.

Um der erfindungsgemäßen biegsamen Papierhülse in jedem Falle eine besonders hohe Festigkeit zu verleihen, wird bevorzugt Papiermaterial verwendet, das Langfaserzellstoff mit Faserlängen zwischen 3 und 6 mm enthält, wobei ein Großteil der Fasern eine Länge von 5 mm und darüber aufweist. Außerdem sollte bei der Verarbeitung des Zellstoffmaterials auf einen hohen Mahlgrad geachtet werden, damit zusammen mit der großen Faserlänge ein hoher Vernetzungsgrad der Fasern und damit eine besonders hohe Festigkeit des erzeugten Papiermaterials erreicht wird.

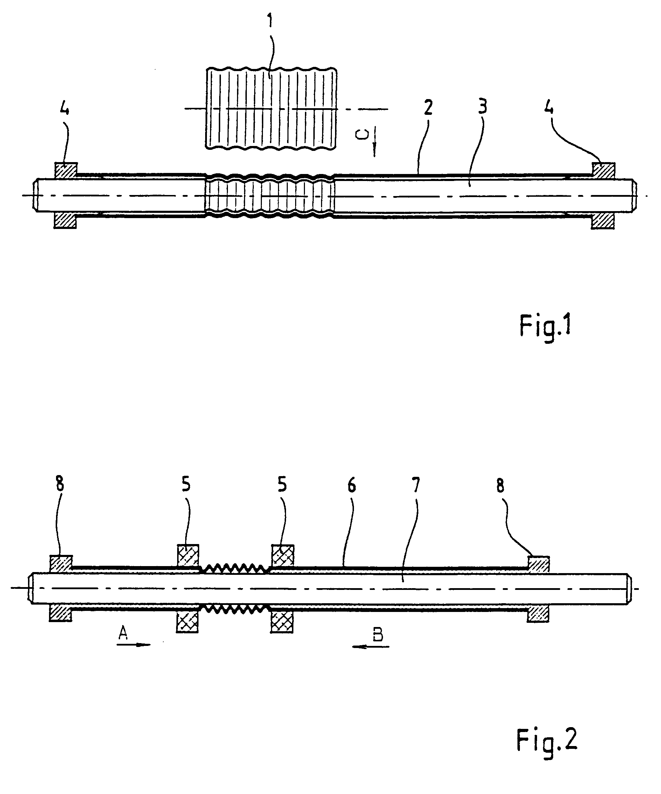

In einem zweiten Herstellungsschritt wird auf einer Rillvorrichtung, wie sie in Fig. 1 gezeigt ist, die mehrlagige Papierhülse 2 aus dem ersten Herstellungsschritt auf einem Rilldorn 3 mit Hilfe zweier an den Enden der Papierhülse 2 angeordneter Zentrierbüchsen 4 axial lagerichtig und radial zentrisch positioniert. Der gezeigte Rilldorn 3 weist zwei glatte Bereiche und zwischen diesen einen gerillten Bereich auf, längs dessen der spätere Faltenbalg der biegsamen Papierhülse entstehen wird.

Gemeinsam mit dem Rilldorn 3 wird nun die mehrlagige Papierhülse 2 in Rotation um die Längsachse versetzt. Im Bereich der Rillung des Rilldorns 3 wird durch eine radiale Hubbewegung in Richtung des Pfeiles C mindestens eine axial parallel zum Rilldorn 3 angeordnete Rillrolle 1 seitlich in den Mantel der mehrlagigen Papierhülse 2 eingedrückt. Vorzugsweise werden mindestens drei symmetrisch um den Umfang des Rilldornes 3 angeordnete Rillrollen 1 eingesetzt, um die Radialkräfte am Rilldorn 3 so klein wie möglich zu halten und um ein Ausweichen des Rilldornes 3 mit der mehrlagigen Papierhülse 2 in radialer Richtung zu verhindern.

Um mit derselben Vorrichtung unterschiedliche Arten von biegsamen Papierhülsen herstellen zu können, sind verschiedene austauschbare Sätze von Rilldornen 3 und zugehörigen Rillrollen 1 mit unterschiedlicher Anzahl, Anordnung, Beabstandung und Tiefe der Rillen zum Einsatz im zweiten Herstellungsschritt vorgesehen. Das Verhältnis von Rilltiefe und Rillenabstand liegt in einem Bereich zwischen 1:2 bis 1:5.

Bei einer einfachen Ausführungsart der Rillvorrichtung können die Rillrollen 1 beim Andrücken gegen die rotierende Papierhülse 2 um ihre parallel zum Rilldorn 3 verlaufenden Längsachse frei in eine zum Rilldorn 3 gegenläufige Rotation versetzt werden. Bei etwas aufwendigeren Rillvorrichtungen werden die Rillrollen 1 abgestimmt mit der Umfangsgeschwindigkeit des Außendurchmessers der Papierhülse 2 angetrieben. Dies kann entweder durch entsprechende Einstellung der Rotationsgeschwindigkeit des Rilldornes 3 oder durch Einstellung der Antriebsgeschwindigkeit der Rillrollen 1 erfolgen.

Nach Beendigung des Rillvorgangs werden die Rillrollen 1 in Gegenrichtung des Pfeiles C wieder durch eine radiale Hubbewegung von der Papierhülse 2 abgehoben und die nunmehr gerillte Papierhülse kann vom Rilldorn 3 abgestreift werden. Um ein vorzeitiges Falten oder Beschädigen der Papierhülse 2 beim Abstreifen vom Rilldorn 3 zu vermeiden, darf die Papierhülse 2 nicht geschoben werden, sondern das Abstreifen muß durch Abziehen der Papierhülse 2 erfolgen.

Der Innendurchmesser der Papierhülse 2 wird im Verhältnis zum Außendurchmesser des Rilldornes 3 so gewählt, daß eine Rückverformung der im zweiten Herstellungsschritt erzeugten Rillen auf der Papierhülse 2 beim Abstreifen derselben vom Rilldorn 3 vermieden wird.

In einem dritten Herstellungsschritt wird nun die gerillte mehrlagige Papierhülse 6, wie in Fig. 2 gezeigt, auf einen Faltdorn 7 einer Faltvorrichtung gesteckt, mittels beidseits des gerillten Bereichs der Papierhülse 6 angeordneter Klemmringe 5 auf zwei von den Enden der Papierhülse 6 in axialer Richtung jeweils bis zu den Klemmringen 5 sich erstreckende weitere Zentrierbüchsen 8 gespannt und durch axiales Zusammenschieben bei den weiteren Zentrierbüchsen 8 in Richtung der Pfeile A bzw. B im Bereich der Rillung aufgefaltet.

Der Innendurchmesser der Papierhülse 6, die Anzahl, die Anordnung und Tiefe der im zweiten Herstellungsschritt erzeugten Rillen sowie der Außendurchmesser des Faltdornes 8 werden so gewählt, daß der im dritten Herstellungsschritt gefaltete Balgbereich der Papierhülse 6 den Faltdorn 7 am ganzen Umfang berührt. Damit kann ein seitliches Ausweichen der Papierhülse 6 verhindert werden und es wird eine gleichmäßige, regelmäßige Faltung des Faltenbalges im Bereich der Rillen erreicht.

Um ein Verklemmen der gefalteten Papierhülse 6 beim Abstreifen vom Faltdorn 7 zu vermeiden, darf die Hülse wiederum nicht abgeschoben werden, sondern das Abstreifen muß durch Abziehen der Hülse nach Entfernen der Klemmringe 5 von den weiteren Zentrierbüchsen 8 erfolgen.

Damit die Papierhülse noch nicht zu steif und zu spröde für eine Weiterverarbeitung ist, sollte zumindest der zweite, vorzugsweise aber auch der dritte Herstellungsschritt bereits vor dem Aushärten der Verklebung benachbarter Papierlagen aus dem ersten Herstellungsschritt durchgeführt werden. Die Restfeuchte der Papierhülse 2 bzw. 6 sollte im zweiten und dritten Herstellungsschritt mehr als 20 %, vorzugsweise zwischen 30% und 40% betragen.

Typischerweise weist die Papierhülse 6 ein Verhältnis von Länge zu lichtem Innendurchmesser zwischen 5 und 25, vorzugsweise zwischen 10 und 20, auf. Der Faltenbalg der biegsamen Papierhülse sollte so lang sein, daß die beiden durch den Faltenbalg miteinander verbundenen Rohrabschnitte durch Biegen des Faltenbalges um etwa 180° in eine Position parallel zueinander gebracht werden können.

Insbesondere für den oben erwähnten zahnärztlichen Gebrauch als Einweg-Speichelzieher kann die erfindungsgemäße biegsame Papierhülse 2 bzw. 6 auf ihren Innen- und Außenflächen mit wasserresistentem oder wasserabweisendem Material beschichtet sein. Es kann aber auch von vornherein wasserresistentes Papier zum Wickeln der Papierhülse im ersten Herstellungsschritt verwendet werden.

Um ein Ansaugen des einen Rohrabschnittes der erfindungsgemäßen Papierhülse bei Verwendung als Einweg-Speichelzieher im Mund des Patienten zu verhindern, kann eine auf einem der Rohrabschnitte aufschiebbare, mit Durchbrechungen versehene Kappe vorgesehen sein. Die Kappe kann aus dem gleichen Material bestehen wie die biegsame Papierhülse 2 bzw. 6. Insbesondere kann sie, wie die Papierhülse selbst, aus mehrlagigem Papier aufgebaut sein und nach einmaliger Benutzung zusammen mit der biegsamen Papierhülse einem Recycling zugeführt werden. Die Kappe kann aber auch für mehrfache Verwendung aus einem dauerhafteren Material bestehen, beispielsweise aus Kunststoff oder aus Metall, vorzugsweise aus Edelstahlblech.

## Patentansprüche

1. Biegsame Papierhülse, insbesondere Einweg-Speichelzieher für den zahnärztlichen Gebrauch, bestehend aus zwei durch einen Faltenbalg einstückig miteinander verbundenen Rohrabschnitten
dadurch gekennzeichnet,
daß die Papierhülse (2, 6) aus mehrlagigem, insbesondere 3- bis 15-lagigem, vorzugsweise 4- bis 10-lagigem Papier der Dicke 0,07 bis 0,35 mm, insbesondere 0,1 bis 0,2 mm aufgebaut ist und eine Wandstärke zwischen 0,2 bis 2,5 mm, vorzugsweise 0,5 bis 1 mm aufweist.

2. Biegsame Papierhülse nach Anspruch 1, dadurch gekennzeichnet, daß die Papierlagen Langfaserzellstoff mit Faserlängen > 5 mm und hohem Mahlgrad enthalten.

3. Biegsame Papierhülse nach einem der vorhergehenden Ansprüche, dadurch gekennzeichnet, daß die Innen- und Außenflächen der Papierhülse (2, 6) mit wasserresistentem oder wasserabweisendem Material beschichtet sind, oder daß die Papierhülse (2, 6) aus Lagen von wasserresistentem Papier aufgebaut ist.

4. Verfahren zur Herstellung einer biegbaren Papierhülse, insbesondere eines Einweg-Speichelziehers für den zahnärztlichen Gebrauch, bestehend aus zwei durch einen Faltenbalg einstückig miteinander verbundenen Rohrabschnitten,
dadurch gekennzeichnet,
daß in einem ersten Herstellungsschritt auf einer Wickeleinrichtung eine rohrförmige Papierhülse aus dünnem Papier mehrlagig gewickelt und jede Lage mit ihren benachbarten Lagen verklebt wird,
daß in einem zweiten Herstellungsschritt die mehrlagige Papierhülse (2) auf einem Rilldorn (3) einer Rillvorrichtung, der auf seiner axialen Länge einen glatten, einen gerillten und daran anschließend einen weiteren glatten Bereich aufweist, mit Hilfe zweier an den Enden der Papierhülse (2) angeordneter Zentrierbüchsen (4) axial lagerichtig und radial zentrisch positioniert, gemeinsam mit dem Rilldorn (3) in Rotation um ihre Längsachse versetzt, durch eine radiale Hubbewegung mindestens einer axial parallel zum Rilldorn (3) angeordneten Rillrolle (1) gegen den gerillten Bereich des Rilldorns (3) gedrückt und nach Abheben der Rillrolle (1) vom Rilldorn (3) abgestreift wird, und
daß in einem dritten Herstellungsschritt die gerillte mehrlagige Papierhülse (6) auf einen Faltdorn (7) gesteckt, mittels beidseits des gerillten Bereichs der Papierhülse (6) angeordneter Klemmringe (5) auf zwei von den Enden der Papierhülse (6) in axialer Richtung jeweils bis zu den Klemmringen (5) sich erstreckende weitere Zentrierbüchsen (8) gespannt und durch axiales Zusammenschieben der beiden weiteren Zentrierbüchsen (8) im Bereich der Rillung aufgefaltet und schließlich nach Entfernen der Klemmringe (5) von den weiteren Zentrierbüchsen (8) abgestreift wird.

5. Verfahren nach Anspruch 4, dadurch gekennzeichnet, daß zumindest der zweite, vorzugsweise auch der dritte Herstellungsschritt bereits vor dem Aushärten der Verklebung benachbarter Papierlagen aus dem ersten Herstellungsschritt durchgeführt wird.

6. Verfahren nach Anspruch 5, dadurch gekennzeichnet, daß die Restfeuchte der Papierhülse (2, 6) im zweiten, vorzugsweise auch im dritten Herstellungsschritt mehr als 20 %, vorzugsweise 30 % bis 40 % beträgt.

7. Verfahren nach einem der Ansprüche 4 bis 6, dadurch gekennzeichnet, daß der Innendurchmesser der Papierhülse (2) im Verhältnis zum Außendurchmesser des Rilldorns (3) so gewählt wird, daß eine Rückverformung der im zweiten Herstellungsschritt erzeugten Rillen auf der Papierhülse (2) beim Abstreifen derselben vom Rilldorn (3) vermieden wird.

8. Verfahren nach einem der Ansprüche 4 bis 7, dadurch gekennzeichnet, daß die Rillrolle(n) (1) angetrieben werden, und daß im zweiten Herstellungsschritt die Umfangsgeschwindigkeit des Außendurchmessers der Papierhülse (2) durch entsprechende Einstellung der Rotationsgeschwindigkeit des Rilldorns (3) gleich der Umfangsgeschwindigkeit der Rillrolle(n) (1) gewählt wird.

9. Verfahren nach einem der Ansprüche 4 bis 8, dadurch gekennzeichnet, daß der Innendurchmesser der Papierhülse (6), die Anzahl, Anordnung und Tiefe der im zweiten Herstellungsschritt erzeugten Rillen sowie der Außendurchmesser des Faltdorns (8) so gewählt werden, daß der im dritten Herstellungsschritt gefaltete Balgbereich der Papierhülse (6) den Faltdorn (7) am ganzen Umfang berührt.

10. Verfahren nach einem der Ansprüche 4 bis 9, dadurch gekennzeichnet, daß im zweiten Herstellungsschritt das Verhältnis von Rilltiefe und Rillenabstand im Bereich 1:2 bis 1:5 gewählt wird.

## Claims

1. Flexible paper tube, in particular for dental applications as a throw-away saliva suction unit, comprising two tubular sections integrally attached to each other via a bellows, characterized in that the paper tube (2, 6) is constructed from multi-layer paper, in particular having 3 through 15 layers, preferentially 4 through 10 layers with a thickness of 0.07 to 0.35 mm, in particular 0.1 to 0.2 mm and with a wall thickness between 0.2 to 2.5 mm, preferentially 0.5 to 1 mm.

2. Flexible paper tube according to claim 1, characterized in that the paper layers contain long fiber pulp having fiber lengths > 5 mm and a high degree of beating.

3. Flexible paper tube according to one of the preceding claims, characterized in that the inner and outer surfaces of the paper tube (2, 6) are coated with water-resistant or water-repellent material or the paper tube (2, 6) is constructed from layers of water-resistant paper.

4. Method for the production of a flexible paper tube, in particular a throw-away saliva suction unit for dentistry comprising two tubular sections integrally connected to each other via a bellows, characterized in that
in a first manufacturing step, a cylindrically shaped paper tube is wound from thin paper in a multi-layer fashion on a winding device and each layer is glued to its neighbouring layer,
in a second manufacturing step, the multi-layer paper tube (2) is positioned, with the assistance of two centering bushings (4) arranged at the ends of the paper tube (2), in an axially aligned and radially centered fashion on a fluted arbor (3) of a fluting device having, along its axial length a smooth, a fluted and a subsequent additional smooth region, set into rotation about its longitudinal axis along with the fluted arbor (3), pushed, by means of a radial stroke of at least one fluted roller (1) arranged axially parallel to the fluted arbor (3), against the fluted region of the fluted arbor (3), and stripped from the fluted arbor (3) after removal of the fluted roller (1), and
in a third manufacturing step, the fluted multi-layer paper tube (6) is placed onto a folding arbor (7), clamped, by means of clamping rings (5) arranged on both sides of the fluted region of the paper tube (6), onto two additional centering bushings (8) each extending in the axial direction from the end of the paper tube (6) up to the clamping rings (5), folded-up in the region of the fluting by axially pushing the two additional bushings (8) together, and finally stripped from the additional bushings (8) after removal of the clamping rings (5).

5. Method according to claim 4, characterized in that at least the second, preferentially also the third manufacturing step is carried out before hardening of the glued neighbouring paper layers of the first manufacturing step.

6. Method according to claim 5, characterized in that the residual moisture content of the paper tube (2, 6) in the second and preferentially also in the third manufacturing step assumes a value exceeding 20%, and preferentially 30% to 40%.

7. Method according to one of the claims 4 through 6, characterized in that the inner diameter of the paper tube (2) is selected relative to the outer diameter of the fluted arbor (3) to prevent a flattening out of the grooves in the paper tube (2) produced in the second manufacturing step when stripping same from the fluted arbor (3).

8. Method according to one of the claims 4 through 7, characterized in that the fluted roller or rollers (1) are driven and that, in the second manufacturing step, the peripheral velocity of the outer diameter of the paper tube (2) is selected by appropriate adjustment of the rotational velocity of the fluted arbor (3) to be equal to the peripheral velocity of the fluted roller or rollers (1).

9. Method according to one of the claims 4 through 8, characterized in that the inner diameter of the paper tube (6), the number, arrangement, and depth of the grooves produced in the second manufacturing step as well as the outer diameter of the folding arbor (8) are chosen in such a fashion that the bellow region of the paper tube (6), which is folded-up in the third manufacturing step, is in contact with the folding arbor (7) around the entire periphery.

10. Method according to one of the claims 4 through 9, characterized in that, in the second manufacturing step, the ratio of groove depth to groove separation is chosen in the range between 1:2 to 1:5.

## Revendications

1. Manchon de papier flexible, en particulier extracteur de salive à jeter pour l'emploi dans le domaine dentaire, constitué de deux tronçons de tube reliés l'un à l'autre d'une seule pièce par un soufflet plissé,
caractérisé en ce que le manchon de papier (2, 6) est réalisé avec du papier en plusieurs strates, en particulier de 3 à 15 strates, de préférence de 4 à 10 strates, d'une épaisseur de 0,07 à 0,35 mm, en particulier de 0,1 à 0,2 mm, et présente une épaisseur de paroi entre 0,2 et 2,5 millimètres, de préférence entre 0,5 et 1 mm.

2. Manchon de papier flexible selon la revendication 1, caractérisé en ce que les strates de papier contiennent des matériaux cellulosiques à fibres allongées avec des longueurs de fibres supérieures à 5 mm et un indice d'égouttage élevé.

3. Manchon de papier flexible selon l'une des revendications précédentes, caractérisé en ce que la surface intérieure et la surface extérieure du manchon de papier (2, 6) sont revêtues d'un matériau résistant à l'eau ou d'un matériau hydrofuge, ou en ce que le manchon de papier (2, 6) est réalisé de strates de papier résistant à l'eau.

4. Procédé pour fabriquer un manchon de papier flexible, en particulier un extracteur de salive à jeter pour l'utilisation dans le domaine dentaire, constitué de deux tronçons de tube reliés d'une seule pièce l'un à l'autre par un soufflet plissé,
caractérisé en ce que
- lors d'une première étape de fabrication, on enroule sur un dispositif d'enroulement un manchon de papier tubulaire en plusieurs strates de papier mince, et chaque strate est collée avec les strates qui lui sont voisines,
- lors d'une seconde étape de fabrication, on positionne le manchon de papier (2) à plusieurs strates en position axiale correcte et radialement centrée sur une broche de rainurage (3) d'un dispositif de rainurage, laquelle présente sur sa longueur axiale une zone lisse, une zone rainurée et une autre zone lisse qui s'y raccorde, à l'aide de deux douilles de centrage (4) agencées aux extrémités du manchon de papier (2), on le met en rotation autour de son axe longitudinal, conjointement avec la broche de rainurage (3), on appuie par un déplacement radial contre la zone rainurée de la broche de rainurage (3) au moins un galet de rainurage (1) agencé axialement parallèlement à la broche de rainurage (3), et après soulèvement du galet de rainurage (1) on retire le manchon de la broche de rainurage (3), et
- lors d'une troisième étape de fabrication, on enfiche le manchon de papier (6) à plusieurs strates rainuré sur une broche de plissage (7), au moyen de bagues de serrage (5) agencées des deux côtés de la zone rainurée du manchon de papier (6) on le serre vers deux autres douilles de centrage (8) qui s'étendent depuis les extrémités du manchon de papier (6) en direction axiale respectivement jusqu'aux bagues de serrage (5), et par rapprochement axial des deux autres douilles de centrage (8) on le plisse dans la zone du rainurage, et on le retire enfin après enlèvement des bagues de serrage (5) depuis les autres douilles de centrage (8).

5. Procédé selon la revendication 4, caractérisé en ce que au moins la seconde et de préférence également la troisième étape de fabrication sont exécutées déjà avant le durcissement du collage des strates de papier voisines de la première étape de fabrication.

6. Procédé selon la revendication 5, caractérisé en ce que l'humidité résiduelle du manchon de papier (2, 6) dans la seconde et de préférence également dans la troisième étape de fabrication est supérieure à 20% et s'élève de préférence de 30 à 40%.

7. Procédé selon l'une des revendications 4 à 6, caractérisé en ce que le diamètre intérieur du manchon de papier (2) est choisi en relation du diamètre extérieur de la broche de rainurage (3) de telle manière que l'on évite une déformation en retour des rainures produites lors de la seconde étape de fabrication sur le manchon de papier (2) lorsqu'on retire celui-ci de la broche de rainurage (3).

8. Procédé selon l'une des revendications 4 à 7, caractérisé en ce que le(s) galet(s) de rainurage (1) est(sont) entraîné(s), et en ce que dans la seconde étape de fabrication on choisit la vitesse périphérique du diamètre extérieur du manchon de papier (2), par un réglage correspondant de la vitesse de rotation de la broche de rainurage, égale à la vitesse périphérique du(des) galet(s) de rainurage (1).

9. Procédé selon l'une des revendications 4 à 8, caractérisé en ce que le diamètre intérieur du manchon de papier (6), le nombre, l'agencement et la profondeur des rainures produites lors de la seconde étape de fabrication, ainsi que le diamètre extérieur de la broche de plissage (8) sont choisis de telle manière que la région de soufflet plissée lors de la troisième étape de fabrication sur le manchon de papier (6) touche la broche de plissage (7) sur toute la périphérie.

10. Procédé selon l'une des revendications 4 à 9, caractérisé en ce que lors de la seconde étape de fabrication, le rapport entre la profondeur et la distance des rainures est choisi dans la plage de 1:2 à 1:5.
